# EUROPÄISCHE PATENTSCHRIFT

(11) **EP 0 802 220 B1**
(45) Veröffentlichungstag und Bekanntmachung des Hinweises auf die Patenterteilung: **09.08.2000**
(21) Anmeldenummer: 97105879.7
(22) Anmeldetag: 10.04.1997
(51) Int. Cl.: C08J 9/12

(54) **Unter Verwendung halogenfreier Treibmittel hergestellte Schaumstoffplatten**
Foam sheets, obtained using halogen-free blowing agents
Plaques de mousse obtenues à l'aide d'agent d'expansion non halogéné

(30) Priorität: 19.04.1996 DE 19615486
(43) Veröffentlichungstag der Anmeldung: 22.10.1997
(73) Patentinhaber: BASF AKTIENGESELLSCHAFT, 67056 Ludwigshafen (DE)
(72) Erfinder: Scherzer, Dietrich, Dr., 67433 Neustadt (DE); Hahn, Klaus, Dr., 67281 Kirchheim (DE); Alicke, Gerhard, 67549 Worms (DE); Turznik, Gerhard, Dr., 67269 Grünstadt (DE); Dietzen, Franz-Josef, Dr., 67071 Ludwigshafen (DE); Loth, Wolfgang, Dr., 67098 Bad Dürkheim (DE); Ehrmann, Gerd, Dr., 67146 Deidesheim (DE)

(56) Entgegenhaltungen:
- WO-A-94/28058
- US-A- 5 112 875

## Beschreibung

Die Erfindung betrifft unter Verwendung halogenfreier Treibmittel hergestellte Schaumstoffplatten und Verfahren zu ihrer Herstellung. Die Erfindung betrifft insbesondere solche Schaumstoffplatten, die eine Dicke von mindestens 20 mm aufweisen und eine Thermoplastmatrix auf Basis von Polystyrol sowie geschlossene Zellen, die frei von halogenhaltigen Gasen sind, enthalten.

Für die Herstellung von Schaumstoffplatten auf Basis von Styrolpolymerisaten durch Extrusion ist eine Vielzahl von Treibmitteln vorgeschlagen worden.

Beispielsweise ist aus der EP-A-464 581 ein Verfahren zur Herstellung von Schaumstoffplatten mit hoher Druckfestigkeit und einem Querschnitt von mindestens 50 cm² bekannt, bei dem ein Gemisch aus einem Styrolpolymerisat, 5 bis 16 Gew.-%, bezogen auf das Styrolpolymerisat, eines Treibmittels, sowie gegebenenfalls üblichen Zusatzstoffen, extrudiert wird, wobei als Treibmittel ein Gemisch verwendet wird, welches

| | | |
|---|---|---|
| a) | 3 bis 70 Gew.-% | eines Alkohols oder Ketons mit einen Siedepunkt zwischen 56 und 100°C, |
| b) | 5 bis 50 Gew.-% | Kohlendioxid und |
| c) | 0 bis 90 Gew.-% | eines gesättigten C₃- bis C₅-Kohlenwasserstoffs und/oder eines zwischen -30°C und +30°C siedenden, Wasserstoff enthaltenden Fluorchlor- oder Fluorkohlenwasserstoffs |

enthält.

Bei Verwendung von schnell aus dem Schaum diffundierenden Treibmitteln, z.B. CO₂ und Verwendung eines üblichen Polystyrols mit enger Molekulargewichtsverteilung, ist eine ausreichende Dimensionsstabilität und Druckfestigkeit von Schaumstoffplatten mit einer Plattendicke von 20 mm oder mehr, insbesondere gleich oder größer 50 mm, häufig nicht mehr gewährleistet. Darüber hinaus werden bei Verwendung von Treibmitteln mit hoher Triebkraft häufig Schaumstoffe mit hohem Anteil an offenen Zellen erhalten.

Die WO 94/28 058 beschreibt extrudierte Schaumstoffplatten, die mit halogenfreien Treibmitteln aus Styrolpolymerisaten mit niedriger Vicat-Erweichungstemperatur und hohem Schmelzindex hergestellt werden. Die verhältnismäßig niedrige Erweichungstemperatur führt dazu, daß auch die Druckfestigkeit des Schaumstoffplatten bei erhöhtem Temperaturen verringert ist.

Die WO 95/10560 beschreibt extrudierte Schaumstoffplatten auf Basis von Polystyrol mit einem mittleren Molekulargewicht von 100 000 bis 165 000. Bei der Schaumextrusion von derart niedermolekularem, d.h. verhältnismäßig dünnflüssigem Polystyrol besteht die Gefahr, daß der Schaum nach dem Austritt aus der Düse kollabiert. Außerdem neigen Schaumstoffplatten auf dieser Basis zum Verspröden.

Die Aufgabe der Erfindung bestand darin, unter Verwendung halogenfreier Treibmittel hergestellte extrudierte Schaumstoffplatten auf der Basis von Styrolpolymerisaten bereitzustellen.

Aufgabe der Erfindung war außerdem, ein Verfahren zur Herstellung von Schaumstoffplatten aus Styrolpolymerisaten mit einer Mindestdicke von 20 mm aufzuzeigen, das zu Schaumstoffen mit geschlossenen Zellen führt, die nur ein geringes Wasseraufnahmevermögen besitzen und neben guter Dimensionsstabilität und Druckfestigkeit eine hohe Wärmeformbeständigkeit aufweisen. Ein weiteres Ziel der Erfindung war die Herstellung von Schaumstoffplatten einer Dicke von mehr als 50 mm, vorzugsweise von 80 bis 200 mm bei Verwendung von Treibmittelgemischen aus Ethanol und Kohlendioxid und insbesondere von Kohlendioxid als alleinigem Treibmittel.

Gegenstand der Erfindung sind unter Verwendung halogenfreier Treibmittel hergestellte, extrudierte Schaumstoffplatten mit einer Mindestdicke von 20 mm, enthaltend eine Thermoplastmatrix auf Basis Polystyrol und geschlossene Zellen, die frei von halogenhaltigen Gasen sind, wobei das Polystyrol der Thermoplastmatix ein mittleres Molekulargewicht M_{w} zwischen 175 000 und 500 000 mit einer Uneinheitlichkeit M_{w}:Mₙ von größer als 2,6 aufweist.

Ein weiterer Gegenstand der Erfindung ist ein Verfahren zur Herstellung solcher Schaumstoffplatten durch Extrusion eines Gemisches der plastifizierten Thermoplastmatrix mit 1 bis 15 Gew.-% eines halogenfreien Treibmittels sowie gegebenenfalls üblichen Zusatzstoffe.

Der Kern der Erfindung besteht darin, daß man von einer Polystyrol-Thermoplastmatrix ausgeht, die ein mittleres Molekulargewicht von 175 000 bis 500 000 g/mol, vorzugsweise von 200 000 bis 300 000 g/mol aufweist. Dabei handelt es sich um das Gewichtsmittel des Molekulargewichts, bestimmt mittels Gelpermeationschromatographie (GPC). Das Polystyrol soll eine enge Molekulargewichtsverteilung entsprechen einer Uneinheitlichkeit M_{w}:Mₙ von größer als 2,6, vorzugsweise größer als 2,8 und insbesondere größer als 3,0 aufweisen. Die erfindungsgemäß hergestellten Schaumstoffplatten sind mindestens 20 mm dick, vorzugsweise mehr als 50 mm und insbesondere 80 bis 200 mm. Der Querschnitt beträgt mindestens 50 cm², vorzugsweise 100 bis 2000 cm². Sie sind geschlossenzellig, d.h., mehr als 90 %, vorzugsweise mehr als 95 % der Zellen sind geschlossen, was eine geringe Wasseraufnahme zur Folge hat. Die Dichte der Schaumstoffplatten beträgt vorzugsweise 20 bis 60 g·l⁻¹.

Die bevorzugte Thermoplastmatrix ist Homopolystyrol, grundsätzlich sind jedoch auch Copolymere des Styrols mit geringen Mengen üblicher Comonomerer sowie Mischungen von Polystyrol mit geringem Mengen anderer Thermoplaste geeignet.

Die Herstellung der Schaumstoffplatten erfolgt erfindungsgemäß in an sich bekannter Weise durch Extrusion. In einem Extruder wird die durch Erwärmen plastifizierte Thermoplastmatrix mit dem Treibmittel oder Treibmittelgemisch und gegebenenfalls weiteren Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Als übliche Zusatz- und/oder Hilfsstoffe können der Thermoplastmatrix Antistatika, Stabilisatoren, Farbstoffe, Füllstoffe, Flammschutzmittel und/oder Keimbildner in üblichen Mengen zugesetzt werden.

Beim erfindungsgemäßen Verfahren wird das Treibmittel oder Treibmittel-Gemisch in einer Menge von 1 bis 15 Gew.-%, vorzugsweise 3 bis 11 Gew.-%, insbesondere 4 bis 8 Gew.-%, bezogen auf die Thermoplastmatrix, verwendet. Die Treibmittel sind halogenfreie, flüchtige Substanzen.

Bevorzugt ist eine Treibmittelmischung aus

| | | |
|---|---|---|
| a) | 1 bis 100 Gew.-% | Kohlendioxid, |
| b) | bis zu 95 Gew.-% | eines Ethers aus der Gruppe Dimethylether, Methylethylether und Methylvinylether, |
| c) | bis zu 80 Gew.-% | eines Alkohols oder Ketons mit einem Siedepunkt zwischen 56 und 100°C, und |
| d) | bis zu 30 Gew. -% | eines aliphatischen C₃-C₆-Kohlenwasserstoffs. |

Eine besonders bevorzugte Treibmittelmischung sind Mischungen aus

| | |
|---|---|
| a) | 20 bis 80, vorzugsweise 30 bis 70 Gew.-% Kohlendioxid, |
| c) | 80 bis 20, vorzugsweise 70 bis 30 Gew.-% Ethanol, |
| d) | 0 bis 10 Gew.-% eines aliphatischen C₃-C₆-Kohlenwasserstoffs. |

Andere bevorzugte Treibmittelmischungen enthaltend:

| | | |
|---|---|---|
| a) | 2 bis 90 Gew.-% | Kohlendioxid, |
| b) | 1 bis 30 Gew.-% | Dimethylether, |
| c) | 0 bis 40 Gew.-% | Ethanol, und |
| d) | bis zu 10 Gew.-% | eines aliphatischen C₃-C₆-Kohlenwasserstoffs. |

Schließlich können außer Kohlendioxid auch andere anorganische Gase, wie Stickstoff, Argon oder Ammoniak, gegebenenfalls im Gemisch mit halogenfreien organischen Treibmitteln eingesetzt werden.

Eine Thermoplastmatrix aus Polystyrol mit breiter Molekulargewichtsverteilung kann auf verschiedenen Wegen erzeugt werden. Man kann von üblichem Polystyrol mit enger Molekulargewichtsverteilung ausgehen, wie es z.B. durch die übliche thermisch initiierte Massepolymerisation hergestellt wird. Bei der Schaumextrusion setzt man dem Polystyrol 0,05 bis 1 Gew.-% eines bei Extrusionstemperaturen in Radikale zufallenden Peroxids zu und schmilzt die Mischung auf. Ein bevorzugtes Peroxid ist Dicumylperoxid. Die entstandenen Radikale bewirken einen Molekulargewichtsabbau, verbunden mit einer Molekulargewichtsverbreiterung.

Man kann eine breite Molekulargewichtsverteilung auch ganz einfach dadurch erzeugen, daß man zwei oder mehr Polystyroltypen mit unterschiedlichem Molekulargewicht in Mischung einsetzt.

Schließlich kann man auch direkt ein Polystyrol mit breiter Molekulargewichtsverteilung einsetzen, wie es z.B. durch radikalische Polymerisation von Styrol in wäßriger Suspension entsteht, wenn man große Mengen eines geeigneten Peroxids als Radikalinitiator einsetzt, beispielsweise 0,2 bis 0,5 Gew.-% Dicumylperoxid, bezogen auf Styrol.

Die in dem Beispiel genannten Teile und Prozente beziehen sich auf das Gewicht.

### Beispiel

100 Teile verschiedenartiger Polystyroltypen werden einem Extruder mit einem mittleren Schneckendurchmesser von 53 mm kontinuierlich zugeführt und aufgeschmolzen. Durch eine Einlaßöffnung wurde ein Treibmittelgemisch aus 3,5 Teilen CO₂ und 3,0 Teilen Ethanol kontinuierlich eingedrückt und in die Schmelze eingemischt.

Das im Extruder gleichmäßig geknetete Schmelze-Treibmittelgemisch wurde dann einem zweiten Extruder mit einem Schneckendurchmesser von 90 mm zugeführt und dort während einer Verweilzeit von etwa 10 min auf die zu Schäumen günstige Temperatur vom 90-100°C abgekühlt. Die gekühlte Schmelze wurde sodann durch eine Schlitzdüse von 50 mm x 1,5 mm in die Atmosphäre extrudiert. Der dabei entstehenden Schaum wurde durch ein teflonbeschichtetes Werkzeug zu Platten einer möglichst großen Dicke geformt. Es wurden gleichmäßige, geschlossenzellige und formstabile Polystyrolschaumstoffköper erhalten.

Die Tabelle 1 zeigt die Eigenschaften der eingesetzten Polystyroltypen und die maximal erreichte Plattenstärke

**Tabelle 1**

| Polystyrol | M_{w} g/mol | M_{w} : Mₙ | max. Plattenstärke mm |
|---|---|---|---|
| A | 254 000 | 2,37 | 45 |
| B | 197 000 | 2,54 | 47 |
| C | 320 000 | 2,02 | - |
| D | 198 000 | 2,71 | 59 |
| E | 225 000 | 3,09 | 64 |
| F | 264 000 | 3,14 | 62 |
| G | 290 000 | 2,83 | 59 |

Die Polystyroltypen A,B und C sind handelsübliche Polystyrole, die durch thermisch initiierte Massepolymerisation hergestellt worden waren. Sie sind nicht erfindungsgemäß.

Polystyrol D wurde hergestellt durch Vermischen von Polystyrol A mit o,1 Gew.-% Dicumylperoxid in einem Extruder bei 120 - 160°C und einer Verweilzeit von 10 min, wobei ein Molekulargewichtsabbau und eine Molekulargewichtsverbreitung eintrat.

Polystyrol E ist eine Mischung der Polystyrole B und C im Verhältnis 2:1; Polystyrol F ist eine Mischung der Polystyrole B und C im Verhältnis 1:2.

Polystyrol G wurde folgendermaßen hergestellt:

In einem druckfesten 50 l Rührkessel aus rostfreiem Stahl wurde eine Mischung aus 19,5 kg vollentsalztem Wasser 19,5 g Na4P207 und 52,7 g MgSO4 vorgelegt. Hierzu wurden 17 kg Styrol, 17 g Dibenzoylperoxid, 51 g Dicumylperoxid sowie 5000 ppm dimeres α-Methylstyrol (DMS) zugegeben. Die Mischung wurde innerhalb von 2 Std. von 25 auf 100°C und anschließend innerhalb von 5 Std. von 100 auf 130°C erhitzt. Bei dieser Temperatur wurde die Mischung für weitere 3 Std. gehalten. Zu der Mischung wurde 60 Min. nach Erreichen einer Temperatur von 80°C, 478 g einer 10 gew.-% wäßrigen Polyvinylpyrrolidon-Lösung (K-Wert:90) zugefügt. Die erhaltenen Perlen werden abzentrifugiert und mit kalter Luft getrocknet.

Die Molekulargewichte wurden nach der GPC-Methode bei folgenden Meßbedingungen bestimmt:

| | |
|---|---|
| Stationäre Phase: | 5 Mixed B-Polystyrolsäulen (7,5 x 300 mm, Pl-Gel) der Firma Polymer Laboratories |
| Mobile Phase: | THF (Fluß 1,2 ml/min) |
| Eichung: | MG>500 g/mol mit PS-Eichkit der Fa. Polymer Laboratories |
| Detektion: | RI(Brechungsindex) Fa. Waters 410 |
| M_{w} : Mₙ wurde aus den Molmassenverteilungen durch Integration bestimmt. | |

## Patentansprüche

1. Unter Verwendung halogenfreier Treibmittel hergestellte, extrudierte Schaumstoffplatten mit einer Mindestdicke von 20 mm, enthaltend Polystyrol als Thermoplastmatrix und geschlossene Zellen, die frei von halogenhaltigen Gasen sind, dadurch gekennzeichnet, daß das Polystyrol der Thermoplastmatrix mittleres ein Molekulargewicht M_{w} zwischen 175 000 und 500 000 mit einer Uneinheitlichkeit M_{w}:Mₙ von größer als 2,6 aufweist.

2. Schaumstoffplatten nach Anspruch 1, dadurch gekennzeichnet, daß ihre Dicke mehr als 50 mm, vorzugsweise 80 bis 200 mm beträgt.

3. Schaumstoffplatten nach Anspruch 1, dadurch gekennzeichnet, daß mehr als 90 %, vorzugsweise mehr als 95 % ihrer Zellen geschlossen sind.

4. Verfahren zur Herstellung der Schaumstoffplatten nach Anspruch 1 durch Extrusion eines Gemisches der plastifizierten Thermoplastmatrix mit 1 bis 15 Gew.-% eines halogenfreien Treibmittels sowie gegebenenfalls üblichen Zusatzstoffen.

5. Verfahren nach Anspruch 4, dadurch gekennzeichnet, daß als Treibmittel eine Mischung aus
| | | |
|---|---|---|
| a) | 1 bis 100 Gew.-% | Kohlendioxid, |
| b) | bis zu 95 Gew.-% | eines Ethers aus der Gruppe Dimethylether, Methylethylether und Methylvinylether, |
| c) | bis zu 80 Gew.-% | eines Alkohols oder Ketons mit einem Siedepunkt zwischen 56 und 100°C, und |
| d) | bis zu 30 Gew.-% | eines aliphatischen C₃-C₆-Kohlenwasserstoffs |
verwendet wird.

6. Verfahren nach Anspruch 4, dadurch gekennzeichnet, daß als Treibmittel eine Mischung aus
| | | |
|---|---|---|
| a) | 20 bis 80 Gew.-% | Kohlendioxid, |
| c) | 80 bis 20 Gew.-% | Ethanol und |
| d) | 0 bis 10 Gew.-% | eines aliphatischen C₃-C₆-Kohlenwasserstoffs |
verwendet wird.

7. Verfahren nach Anspruch 4, dadurch gekennzeichnet, daß als Treibmittel eine Mischung aus
| | | |
|---|---|---|
| a) | 2 bis 90 Gew.-% | Kohlendioxid, |
| b) | 1 bis 30 Gew.-% | Dimethylether, |
| c) | 0 bis 60 Gew.-% | Ethanol, und |
| d) | bis zu 10 Gew.-% | eines aliphatischen C₃-C₆-Kohlenwasserstoffs |
verwendet wird.

8. Verfahren nach Anspruch 4, dadurch gekennzeichnet, daß als Treibmittel ausschließlich Kohlendioxid verwendet wird.

9. Verfahren nach Anspruch 4, d.g., daß man als Thermoplastmatrix ein übliches Polystyrol mit enger Molekulargewichtsverteilung einsetzt, und die Extrusion in Gegenwart von 0,05 bis 1 Gew.-% eines bei den Extrusionstemperaturen in Radikale zerfallenden Peroxids durchführt.

10. Verfahren nach Anspruch 9, d.g., daß man die Extrusion in Gegenwart von Dicumylperoxid durchführt.

11. Verfahren nach Anspruch 4, d.g., daß man als Thermoplastmatrix ein Gemisch von zwei oder mehr Polystyroltypen mit unterschiedlichen Molekulargewichten einsetzt.

12. Verfahren nach Anspruch 4, d.g., daß man als Thermoplastmatrix ein durch radikalische Polymerisation in wäßriger Suspension hergestelltes Polystyrol einsetzt.

13. Verfahren nach Anspruch 11, dadurch gekennzeichnet, daß als Treibmittel eine Mischung aus
| | | |
|---|---|---|
| a) | 2 bis 90 Gew.-% | Kohlendioxid, |
| b) | 1 bis 30 Gew.-% | Dimethylether, |
| c) | 0 bis 60 Gew.-% | Ethanol, und |
| d) | bis zu 10 Gew.-% | eines aliphatischen C₃-C₆-Kohlenwasserstoffs |
verwendet wird.

## Claims

1. An extruded foam board produced using halogen-free blowing agents, having a minimum thickness of 20 mm, comprising polystyrene as thermoplastic matrix and having closed cells which are free of halogen-containing gases, wherein the polystyrene of the thermoplastic matrix has a mean molecular weight M_{w} of from 175,000 to 500,000 and a polydispersity M_{w}:Mₙ of greater than 2.6.

2. A foam board as claimed in claim 1 having a thickness of more than 50 mm, preferably from 80 to 200 mm.

3. A foam board as claimed in claim 1, wherein more than 90 %, preferably more than 95%, of its cells are closed.

4. A process for producing a foam board as claimed in claim 1 by extrusion of a mixture of the plasticized thermoplastic matrix with from 1 to 15% by weight of a halogen-free blowing agent and, if desired, customary additives.

5. A process as claimed in claim 4, wherein the blowing agent used is a mixture of
| | | |
|---|---|---|
| a) | from 1 to 100% by weight of | carbon dioxide, |
| b) | up to 95% by weight of | an ether selected from the group consisting of dimethyl ether, methyl ethyl ether and methyl vinyl ether, |
| c) | up to 80% by weight of | an alcohol or ketone having a boiling point of from 56 to 100°C, and |
| d) | up to 30% by weight of | an aliphatic C₃-C₆-hydrocarbon. |

6. A process as claimed in claim 4, wherein the blowing agent used is a mixture of
| | | |
|---|---|---|
| a) | from 20 to 80% by weight of | carbon dioxide, |
| c) | from 80 to 20% by weight of | ethanol and |
| d) | from 0 to 10% by weight of | an aliphatic C₃-C₆-hydrocarbon. |

7. A process as claimed in claim 4, wherein the blowing agent used is a mixture of
| | | |
|---|---|---|
| a) | from 2 to 90% by weight of | carbon dioxide, |
| b) | from 1 to 30% by weight of | dimethyl ether, |
| c) | from 0 to 60% by weight of | ethanol, and |
| d) | up to 10% by weight of | an aliphatic C₃-C₆-hydrocarbon. |

8. A process as claimed in claim 4, wherein the blowing agent used consists exclusively of carbon dioxide.

9. A process as claimed in claim 4, wherein the thermoplastic matrix used is a conventional polystyrene having a narrow molecular weight distribution and the extrusion is carried out in the presence of from 0.05 to 1% by weight of a peroxide which decomposes into free radicals at the extrusion temperatures.

10. A process as claimed in claim 9, wherein the extrusion is carried out in the presence of dicumyl peroxide.

11. A process as claimed in claim 4, wherein the thermoplastic matrix used is a mixture of two or more types of polystyrene having different molecular weights.

12. A process as claimed in claim 4, wherein the thermoplastic matrix used is a polystyrene prepared by free-radical polymerization in aqueous suspension.

13. A process as claimed in claim 11, wherein the blowing agent used is a mixture of
| | | |
|---|---|---|
| a) | from 2 to 90% by weight of | carbon dioxide, |
| b) | from 1 to 30% by weight of | dimethyl ether, |
| c) | from 0 to 60% by weight of | ethanol, and |
| d) | up to 10% by weight of | an aliphatic C₃-C₆-hydrocarbon. |

## Revendications

1. Panneaux en mousse extrudés, fabriqués en utilisant des agents moussants exempts d'atomes d'halogène, possédant une épaisseur minimale de 20 mm, contenant du polystyrène à titre de matrice thermoplastique et possédant des alvéoles fermés qui sont exempts de gaz halogénés, caractérisés en ce que le polystyrène de la matrice thermoplastique présente un poids moléculaire moyen M_{w} entre 175.000 et 500.000, et possède une hétérogénéité M_{w}: Mₙ supérieure à 2,6.

2. Panneaux en mousse selon la revendication 1, caractérisés en ce que leur épaisseur est supérieure à 50 mm, de préférence s'élève de 80 à 200 mm.

3. Panneaux en mousse selon la revendication 1, caractérisés en ce que leurs alvéoles sont fermés à concurrence de plus de 90%, de préférence à concurrence de plus de 95%.

4. Procédé pour la fabrication des panneaux en mousse selon la revendication 1 par extrusion d'un mélange de la matrice thermoplastique plastifiée avec un agent moussant exempt d'atomes d'halogène à concurrence de 1 à 15% en poids et le cas échéant avec des additifs habituels.

5. Procédé selon la revendication 4, caractérisé en ce qu'on utilise, à titre d'agent moussant, un mélange constitué par:
a) à concurrence de 1 à 100% en poids, du dioxyde de carbone,
b) jusqu'à concurrence de 95% en poids, un éther choisi parmi le groupe comprenant l'éther diméthylique, l'éther méthyléthylique et l'éther méthylvinylique,
c) jusqu'à concurrence de 80% en poids, un alcool ou une cétone dont le point d'ébullition se situe entre 56 et 100°C, et
d) jusqu'à concurrence de 30% en poids, un hydrocarbure aliphatique en C₃-C₆.

6. Procédé selon la revendication 4, caractérisé en ce qu'on utilise, à titre d'agent moussant, un mélange constitué par:
a) à concurrence de 20 à 80% en poids, du dioxyde de carbone,
c) à concurrence de 80 à 20% en poids, de l'éthanol, et
d) à concurrence de 0 à 10% en poids, un hydrocarbure aliphatique en C₃-C₆.

7. Procédé selon la revendication 4, caractérisé en ce qu'on utilise, à titre d'agent moussant, un mélange constitué par:
a) à concurrence de 2 à 90% en poids, du dioxyde de carbone,
b) à concurrence de 1 à 30% en poids, de l'éther diméthylique,
c) à concurrence de 0 à 60% en poids, de l'éthanol, et
d) jusqu'à concurrence de 10% en poids, un hydrocarbure aliphatique en C₃-C₆.

8. Procédé selon la revendication 4, caractérisé en ce qu'on utilise, à titre d'agent moussant, exclusivement du dioxyde de carbone.

9. Procédé selon la revendication 4, caractérisé en ce qu'on met en oeuvre, à titre de matrice thermoplastique, un polystyrène habituel possédant une distribution étroite du poids moléculaire et on procède à l'extrusion en présence, à concurrence de 0,05 à 1% en poids, d'un peroxyde se décomposant en radicaux ou aux températures d'extrusion.

10. Procédé selon la revendication 9, caractérisé en ce qu'on effectue l'extrusion en présence de peroxyde de dicumyle.

11. Procédé selon la revendication 4, caractérisé en ce qu'on met en oeuvre, à titre de matrice thermoplastique, un mélange de deux types de polystyrène ou plus possédant des poids moléculaires différents.

12. Procédé selon la revendication 4, caractérisé en ce qu'on met en oeuvre, à titre de matrice thermoplastique, un polystyrène préparé en suspension aqueuse par polymérisation radicalaire.

13. Procédé selon la revendication 11, caractérisé en ce qu'on utilise, à titre d'agent moussant, un mélange constitué par:
a) à concurrence de 2 à 90% en poids, du dioxyde de carbone,
b) à concurrence de 1 à 30% en poids, de l'éther diméthylique,
c) à concurrence de 0 à 60% en poids, de l'éthanol, et
d) jusqu'à concurrence de 10% en poids, un hydrocarbure aliphatique en C₃-C₆.
